# EUROPEAN PATENT APPLICATION

(11) **EP 2 541 993 A1**
(43) Date of publication of application: **02.01.2013**
(21) Application number: 11744567.6
(22) Date of filing: 03.02.2011
(51) Int. Cl.: H04W 52/02, H04W 60/02, H04W 84/10

(54) **MOBILE COMMUNICATION TERMINAL, NETWORK-SIDE DEVICE, MOBILE COMMUNICATION SYSTEM, METHOD OF PROGRAM AND MOBILE COMMUNICATION SYSTEM FOR CHANGING OPERATION PERIOD**

(30) Priority: 22.02.2010 JP 2010036367
(71) Applicant: NEC Corporation, Tokyo 108-8001 (JP)
(72) Inventor: SHINTANI, Tatsuyuki, Tokyo 108-8001 (JP)
(74) Representative: Vossius & Partner
(86) International application number: PCT/JP2011/052800
(87) International publication number: WO 2011/102280

(57) **Abstract**

When it is determined that a terminal is present in a femtocell, a request signal for requesting a network-side device to change a cycle of a cyclic operation is transmitted from the terminal to the network-side device, via a communication path that includes the femtocell. In response to the request signal, the network-side device changes the cycle of the cyclic operation, and transmits, to the terminal, a response signal for notifying of a change to the cycle, via the same communication path. In response to the response signal, the terminal changes the cycle of the cyclic operation.

## Description

### Technical Field

This invention relates to a cyclic operation performed in a mobile communication system and to changing the operation cycle thereof. More particularly, this invention relates to a cyclic operation of a mobile communication terminal which is present in a femtocell and to changing the operation cycle thereof.

### Background Art

A mobile communication terminal (hereinafter, referred to as terminal) in a mobile communication system in general shifts to a standby state after establishing synchronization with a nearby mobile communication terminal base station (hereinafter, referred to as base station) in response to being powered on or traveling from one cell to another. The terminal in a standby state executes various types of processing and consumes power even while its user is not performing any operations on the terminal. If power spent on these types of processing is reduced, the battery standby time of the terminal can be extended.

A technology related to reducing this type of power consumption is described in Japanese Unexamined Patent Application Publication (JP-A) No. 2005-260906 (hereinafter, referred to as Patent Document 1). With the technology described in the document, the cycle of intermittent reception by a terminal is extended depending on the degree of stability of reception quality at which the terminal receives signals transmitted from a macrocell base station.

Another related technology is described in Japanese Unexamined Patent Application Publication (JP-A) No. Hei 09-083425 (hereinafter, referred to as Patent Document 2). With the technology described in the document, settings about the length of intermittent reception interval are changed in a mobile information terminal and a macrocell base station or other network constituent devices in accordance with what is input by operating the mobile communication terminal.

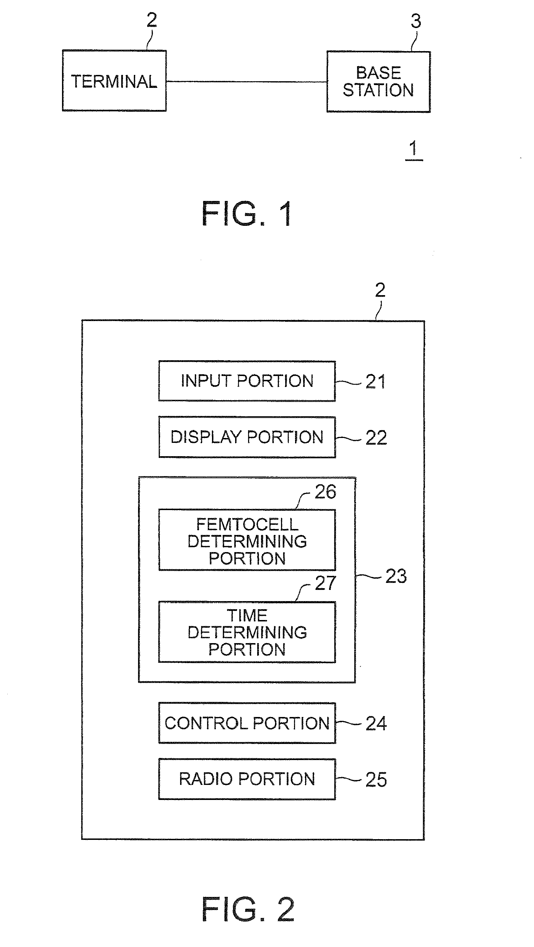

The technologies described in those documents are about a base station that forms a macrocell, but at present, base stations that form a so-called femtocell, which is smaller in communication area than a macrocell, are being proposed. As illustrated in Fig. 1, whereas a macrocell covers an area having a radius of approximately 1 km to a few km, a femtocell covers area having a radius of approximately a few meters, specifically, a narrow area in a house, a small office, or the like. A micro base station that implements a femtocell is connected to a fixed line hooked up to a household landline phone, namely, a phone line, a fiber-optic cable, a CATV cable, or the like.

In a femtocell, the user can use e-mail and short message service (SMS), can browse the Internet via the wireless application protocol (WAP), and can do other activities as in a macrocell. Femtocells are similar to wireless local area networks (LANs) in that both networks use indoor wireless communication, but the advantage of using femtocells is that supporting a wireless LAN is unnecessary on the terminal side. Femtocells also have an advantage for communication terminals business operators in that communication areas can be laid out more densely by using femtocells to cover the interiors of buildings and other areas where radio waves have difficulty in propagating.

### Disclosure of the Invention

### Problem to be Solved by the Invention

A macrocell is generally used by a large number of non-specific users. In addition, the speed at which terminals present in one macrocell travel within the cell varies among the terminals, and some terminals stay in the same place for a long time and other terminals travel fast by using transportation such as automobiles and trains. For terminals traveling fast, in particular, the possibility of missing signals needs to be taken into consideration. It is therefore impractical to build a system on the premise that all users of one macrocell have a tendency to stay in the cell for a prolonged period of time even if specific users do tend to stay long in the cell.

In contrast, a femtocell is used in an individual's home, an office, or the like by a small number of specific users most of the time. A femtocell also does not need to anticipate a situation where a terminal on a mode of transportation travels through the cell fast, and therefore is substantially free of signals being missed due to the traveling of a terminal.

This invention has been made in view of the circumstance under which terminals are used in a femtocell, and an object of this invention is to reduce the power consumption of a terminal which is present in a femtocell.

### Means to Solve the Problem

In order to attain the above-mentioned object, according to an aspect of this invention, there is provided a mobile communication terminal, including: means for determining whether the mobile communication terminal is present in a femtocell; transmission means for transmitting, with the determination as a trigger, to a network-side device which performs a cyclic operation in cooperation with the mobile communication terminal, a first signal for requesting the network-side device to change the cycle, via a communication path that includes at least the femtocell; reception means for receiving, via the communication path, a second signal, which is transmitted by the network-side device in response to the first signal and which notifies of a change to the cycle; and control means for changing, in response to the reception of the second signal, the cycle of the cyclic operation performed by the mobile communication terminal.

Further, according to another aspect of this invention, there is provided a network-side device for performing a cyclic operation in cooperation with a mobile communication terminal which is present in a femtocell, the network-side device including: reception means for receiving, via a communication path that includes at least the femtocell, a first signal which is transmitted by the mobile communication terminal with a determination that the mobile communication terminal is present in the femtocell as a trigger, and which is a request to change a cycle of the cyclic operation; control means for changing, in response to the reception of the first signal, the cycle of the cyclic operation performed by the network-side device; and transmission means for transmitting a second signal, which notifies of the change to the cycle, to the mobile communication terminal via the communication path.

Further, according to another aspect of this invention, there is provided a mobile communication system, including: a mobile communication terminal; and a network-side device for performing a cyclic operation in cooperation with the mobile communication terminal which is present in a femtocell, in which the mobile communication terminal includes: means for determining whether the mobile communication terminal is present in the femtocell,; means for transmitting, with the determination as a trigger, to the network-side device, a first signal for requesting the network-side device to change a cycle of the cyclic operation, via a communication path that includes at least the femtocell; means for receiving, via the communication path, a second signal, which is transmitted by the network-side device in response to the first signal and which notifies of a change to the cycle; and means for changing, in response to the reception of the second signal, the cycle of the cyclic operation performed by the mobile communication terminal, and the network-side device includes: means for receiving the first signal via the communication path that includes at least the femtocell; means for changing, in response to the reception of the first signal, the cycle of the cyclic operation performed by the network-side device; and means for transmitting the second signal, which notifies of the change to the cycle, to the mobile communication terminal via the communication path.

Further, according to another aspect of this invention, there is provided a program for controlling a computer that is mounted to a mobile communication terminal to function as: means for determining whether the mobile communication terminal is present in a femtocell; transmission means for transmitting, with the determination as a trigger, a first signal for requesting to change a cycle of a cyclic operation which is performed by a device on a mobile communication network side and the mobile communication terminal in cooperation with each other, to a network-side device which controls the cyclic operation performed on the mobile communication network side, through wireless communication to/from a base station which forms the femtocell; reception means for receiving, through the wireless communication to/from the base station, a second signal, which is transmitted by the network-side device in response to the first signal and which notifies of a change to the cycle; and control means for changing, in response to the reception of the second signal, the cycle of the cyclic operation performed by the mobile communication terminal.

Further, according to another aspect of this invention, there is provided a program for controlling a computer that is mounted to a network-side device, the network-side device performing a cyclic operation in cooperation with a mobile communication terminal which is present in a femtocell, to function as: reception means for receiving a first signal which is transmitted by the mobile communication terminal with a determination that the mobile communication terminal is present in the femtocell as a trigger, and which is a request to change a cycle of the cyclic operation; control means for changing, in response to the reception of the first signal, the cycle of the cyclic operation performed by the network-side device; and transmission means for transmitting a second signal, which notifies of the change to the cycle, to the mobile communication terminal.

Further, according to another aspect of this invention, there is provided a method of changing a cycle of a cyclic operation of a mobile communication system, including the steps of: determining, by the mobile communication terminal, whether the mobile communication terminal is present in a femtocell; with the determination as a trigger, transmitting from the mobile communication terminal, to a network-side device which performs the cyclic operation in cooperation with the mobile communication terminal, a first signal for requesting the network-side device to change the cycle of the cyclic operation, via a communication path that includes at least the femtocell; changing, by the network-side device, the cycle of the cyclic operation performed in the network-side device in response to the reception of the first signal, and transmitting a second signal which notifies of the change, from the network-side device to the mobile communication terminal via the communication path; and changing, by the mobile communication terminal, the cycle of the cyclic operation performed in the mobile communication terminal in response to the reception of the second signal.

### Effect of the Invention

This invention reduces the power consumption of a terminal in a standby state that is present in a femtocell by changing the cycle of a cyclic operation that is performed by the terminal in cooperation with a base station of the cell, a radio network controller (RNC) of the base station, or other network-side devices, for example, the cycle of intermittent reception of paging signals or the cycle of updating location registration information.

### Brief Description of the Drawing

Fig. 1 is a diagram illustrating the difference in size between a macrocell and a femtocell.
Fig. 2 is a block diagram of a mobile communication system 1 according to an embodiment of this invention.
Fig. 3 is a block diagram of a mobile communication terminal 2.
Fig. 4 is a diagram illustrating an example of a screen that is displayed on a display portion 2 when the operating mode of the mobile communication terminal 2 is set to a power-saving mode.
Fig. 5 is a block diagram of a base station 3 which forms a femtocell.
Fig. 6 is a flow chart illustrating an operation of changing the cycle of updating location registration information when the mobile communication terminal 2 in a power-saving mode is present in the femtocell of the base station 3.
Fig. 7 is a diagram illustrating signals that are transmitted and received between the mobile communication terminal 2 and the base station 3 during the operation of changing the cycle of updating location registration information when the mobile communication terminal 2 in a power-saving mode is present in the femtocell of the base station 3.
Fig. 8 is a flow chart illustrating an operation of changing the cycle of intermittent reception in the mobile communication terminal 2 when the mobile communication terminal 2 in a power-saving mode is present in the femtocell of the base station 3.
Fig. 9 is a diagram illustrating signals that are transmitted and received between the mobile communication terminal 2 and the base station 3 during the operation of changing the cycle of intermittent reception in the mobile communication terminal 2 when the mobile communication terminal 2 in a power-saving mode is present in the femtocell of the base station 3.
Fig. 10 is a flow chart illustrating the operation of changing the cycle of intermittent reception in the mobile communication terminal 2 when the mobile communication terminal 2 in a power-saving mode is present in the femtocell of the base station 3 in a given time slot.

### Best Mode for Embodying the Invention

A mobile communication system 1 according to an embodiment of this invention is described. As illustrated in Fig. 2, the mobile communication system 1 includes a mobile communication terminal 2 (hereinafter, referred to as terminal 2) and a micro base station 3, which forms a femtocell.

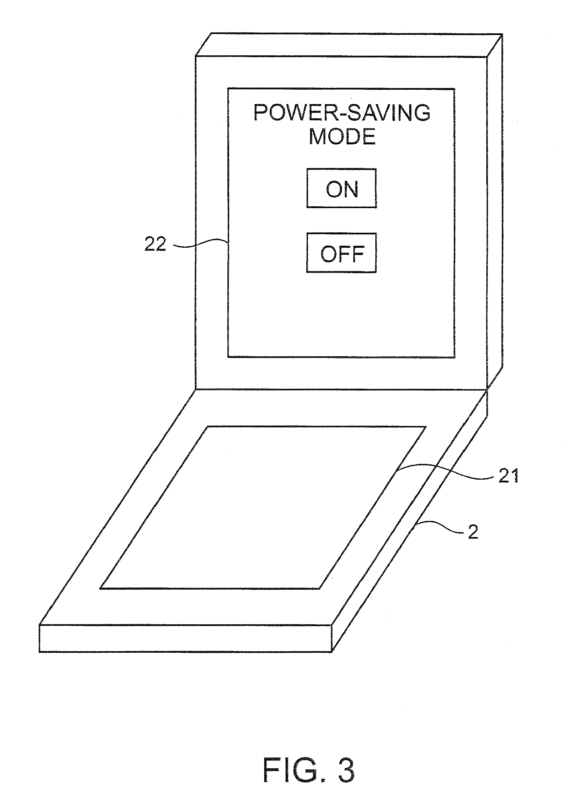

The terminal 2 includes, as illustrated in Fig. 3, an input portion 21, which is an input device such as a numerical keypad or a touch sensor, a display portion 22, which is a display device such as a liquid crystal display or an organic electroluminescence (EL) display, a power-saving mode setting portion 23, a control portion 24, which controls the overall operation of the terminal 2, and a radio portion 25, which is a transceiver for performing wireless communication to/from the micro base station 3.

The power-saving mode setting portion 23 performs operations relevant to a power-saving mode. To set a power-saving mode, a screen as one illustrated in Fig. 3 is displayed on the display portion 22 and a user enters an instruction to enable or disable the power-saving mode on the screen via the input portion 21. The input power-saving mode instruction is stored in a storage device of the power-saving mode setting portion 23.

The power-saving mode setting portion 23 includes a femtocell determining portion 26 and a time determining portion 27. The femtocell determining portion 26 determines whether or not the terminal 2 is present in a femtocell based on the result of reception by the radio portion 25. The time determining portion 27 includes a clock to determine whether or not the current time equals a predetermined time or falls within a predetermined time slot.

The power-saving mode setting portion 23 also transmits a cycle change request signal via the radio portion 25 to the base station 3, with a condition such as power-saving settings being enabled or the terminal 2 being present in the femtocell as a trigger. The cycle change request signal is a signal for requesting the base station 3 to change the cycle of a cyclic operation performed by the terminal 2 and the base station 3 in cooperation with each other or in synchronization with each other.

Receiving from the base station 3 a response to the cycle change request signal, the power-saving mode setting portion 23 further requests the control portion 24 to change the cycle of the cyclic operation in accordance with the specifics of the response. The control portion 24 changes the operation cycle of this operation as requested.

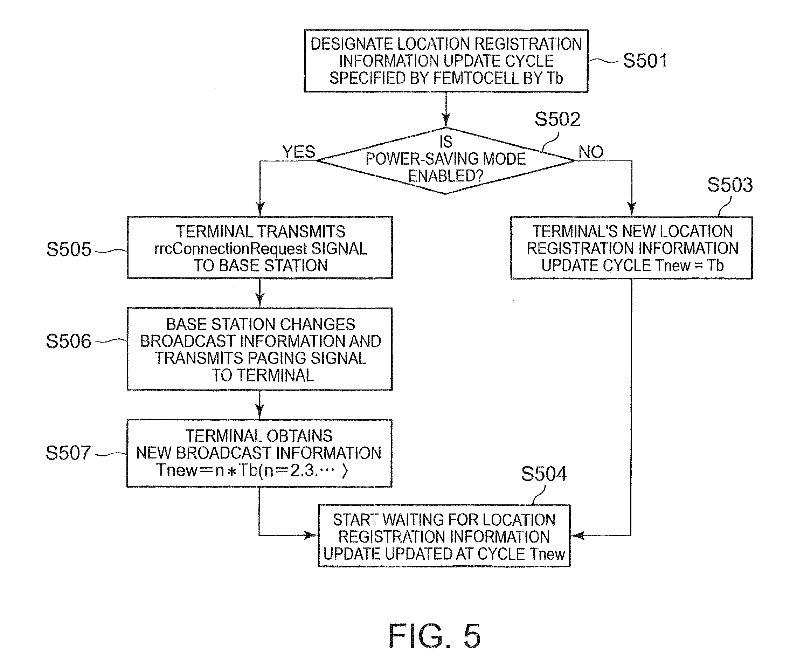

The base station 3 is described with reference to Fig. 5. The base station 3 is a base station that forms a femtocell. The base station 3 is connected to a host network-side device such as a radio network controller (RNC) (not shown) or a device in the core network, which are not shown. The base station 3 includes a power-saving mode setting portion 31, a radio portion 32, which is a transceiver for performing wireless communication to/from the terminal 2, and a control portion 33, which performs overall control of the base station 3.

The power-saving mode setting portion 31 switches between enabling and disabling the power-saving mode in response to a cycle change request signal received via the radio portion 32 from the terminal 2, and stores the current enabled/disabled state in a storage device. The power-saving mode setting portion 31 also transmits a response signal via the radio portion 32 to the terminal 2. The power-saving mode setting portion 31 further requests the control portion 33 to change the cycle of a cyclic operation when the power-saving mode is enabled. The response signal notifies the terminal 2 of the determination to change the cycle and a new cycle set by the change.

Described next is an operation of changing the cycle of a cyclic operation which is performed by the terminal 2 and the base station 3 in the mobile communication system 1.

### (1) Changing the Cycle of Updating Location Registration Information

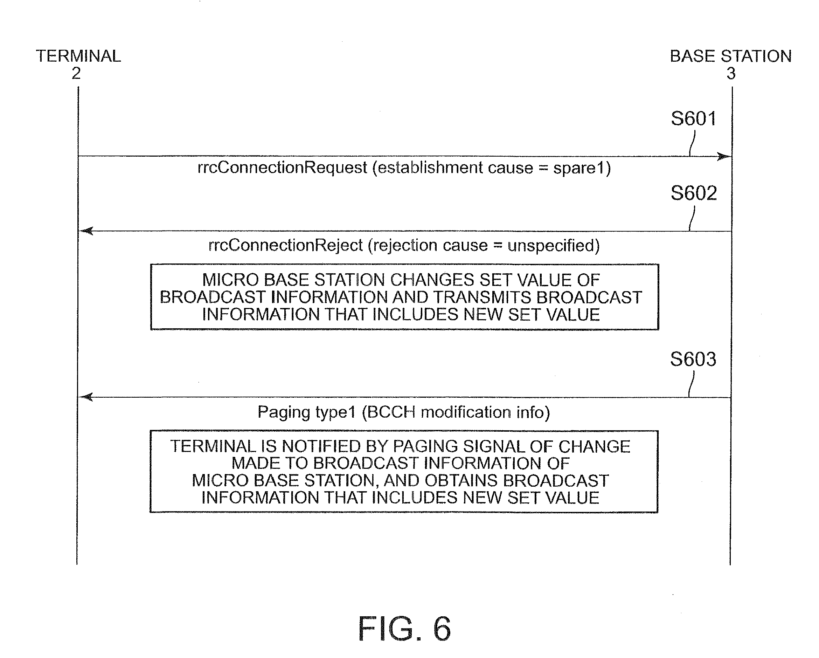

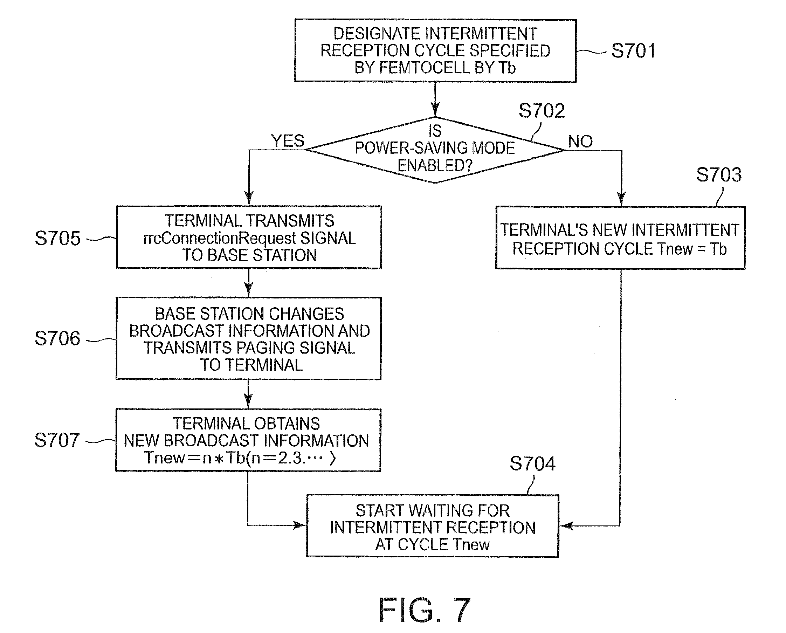

A description is now given with reference to Figs. 6 and 7 of communication held between the terminal 2 and the base station 3 when the cycle of updating location registration information is updated in the mobile communication system 1.

At the moment, no terminals are present in the femtocell of the base station 3 and "disabled" is set as the power-saving mode settings in the power-saving mode setting portion 31 of the base station 3. Immediately before entering the femtocell of the base station 3, the terminal 2 updates location registration information at a cycle Tb in cooperation with a nearby base station (Step S501). In this situation, the terminal 2 subsequently travels into the area of the femtocell formed by the base station 3.

In the case where power-saving mode settings which are set in the power-saving mode setting portion 23 of the terminal 2 at this point are "disabled", the terminal 2 continues updating location registration information at the cycle Tb after entering the femtocell of the base station 3

### (Steps S502 to S504).

In the case where power-saving mode settings which are set in the power-saving mode setting portion 23 are "enabled", on the other hand, when the femtocell determining portion 26 determines that the terminal 2 is present in the femtocell, the power-saving mode setting portion 23 transmits a cycle change request signal via the radio portion 25 (Step S505 and Step 5601). The cycle change request signal used here is a radio resource control (RRC) connection request signal (rrcConnectionRequest) set down in Third Generation Partnership Project (3GPP) TS 25.331 that has "spare1" as the value of the establishment cause information. The purpose of use of the establishment cause value "spare1" is not defined in the current version of 3GPP TS 25.331.

In the base station 3, the radio station 32 receives the rrcConnectionRequest signal as a cycle change request signal from the terminal 2 and, in response to the signal, the power-saving mode setting portion 31 switches the power-saving mode settings to "enabled". The power-saving mode setting portion 31 also changes in broadcast information the cycle of updating location registration information to Tnew, which is N (N is a predetermined integer equal to or larger than 2) times the current cycle Tb. The power-saving mode setting portion 31 instructs the control portion 33 to update location registration information at the cycle Tnew as well. The power-saving mode setting portion 31 further transmits from the radio portion 32 a paging signal for notifying the change of the broadcast information to every terminal within the femtocell (Steps S506 and S603).

The terminal 2 receives the paging signal at the radio portion 25, obtains the broadcast information which includes the value of the changed location registration information update cycle (Step S507), and starts updating location registration information at the new location registration information update cycle (Step S504).

In the case where Tnew is 2Tb, for example, the terminal 2, which has been updating location registration information at the cycle Tb in cooperation with a nearby base station immediately before entering the femtocell of the base station 3, updates location registration information at the cycle 2Tb in cooperation with the base station 3 after entering the femtocell of the base station 3 and Steps S502, S505 to S507, and S504 described above are finished. This way, the frequency of communication for updating location registration information drops by half and the power consumption of the terminal 2 is reduced that much.

The changed location registration information update cycle is applied uniformly to every terminal present in the femtocell of the base station 3, which means that the other terminals present in the femtocell, too, benefit from the power consumption reducing effect accompanying the cycle change.

The operation described above provides the following effects:

First, the power consumption of a terminal present in the femtocell is reduced.

In addition, the only operation the user needs to perform in order to obtain the power consumption reducing effect is setting the power-saving mode to the user's terminal, which, if present in the femtocell, then automatically changes the cycle of the cyclic operation together with the base station, and is thus reduced in power consumption.

Moreover, in this invention where the base station as well as the terminal shifts to the power-saving mode, the operating mode of the base station is changed in response to a cycle change request signal transmitted automatically from a terminal in the power-saving mode, and the cycle change request signal is transmitted through wireless communication that uses a communication protocol standardized by 3GPP, which thus eliminates the need to add input means for changing the operating mode to the base station. In other words, the base station does not need to have special components such as a switch for switching the operating mode and communication means for receiving an instruction from another device to change the operating mode, for example, an infrared data communication device, a wireless LAN interface device, or the like.

### (2) Changing the Cycle of Intermittent Reception

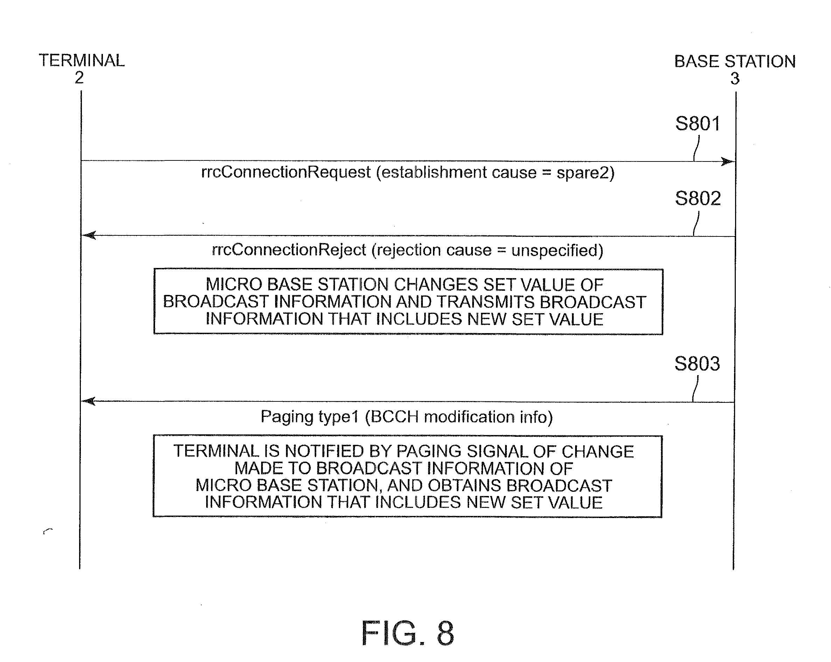

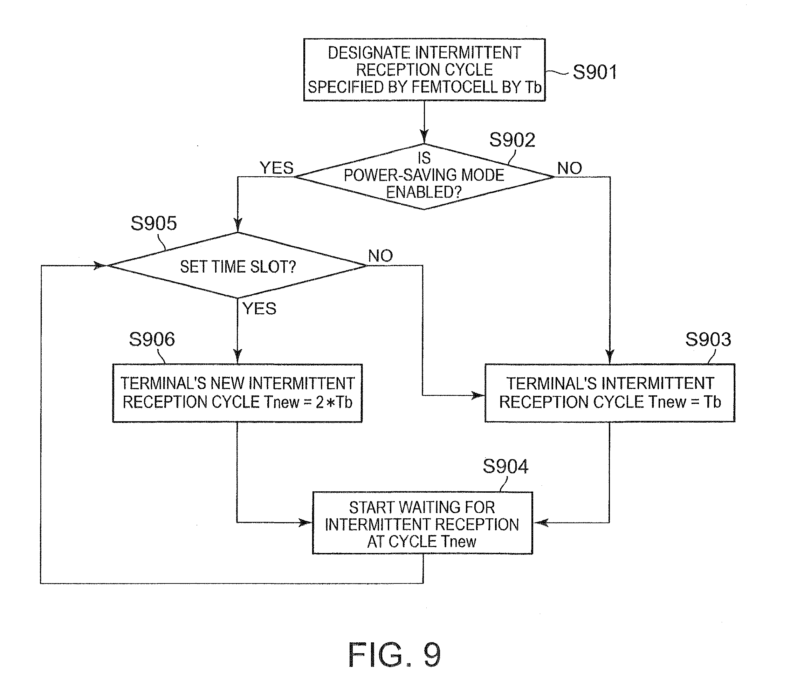

Described next with reference to Figs. 8 and 9 is communication that is held between the terminal 2 and the base station 3 when the cycle of intermittent reception by the terminal is changed in the mobile communication system 1.

At the moment, no terminals are present in the femtocell of the base station 3 and "disabled" is set as the power-saving mode settings in the power-saving mode setting portion 31 of the base station 3. Immediately before entering the femtocell of the base station 3, the terminal 2 receives signals intermittently from a nearby base station at the cycle Tb (Step S701). In this situation, the terminal 2 subsequently travels into the area of the femtocell formed by the base station 3.

In the case where power-saving mode settings which are set in the power-saving mode setting portion 23 of the terminal 2 at this point are "disabled", the terminal 2 continues intermittent reception at the cycle Tb after entering the femtocell of the base station 3 (Steps S702 to S704).

In the case where power-saving mode settings which are set in the power-saving mode setting portion 23 of the terminal 2 are "enabled", on the other hand, when the femtocell determining portion 26 determines that the terminal 2 is present in the femtocell, the power-saving mode setting portion 23 transmits a cycle change request signal via the radio portion 25 (Step S705 and Step S801). The cycle change request signal used here is an RRC connection request signal (rrcConnectionRequest) set down in 3GPP TS 25.331 that has "sparse2" as the value of the establishment cause information. The purpose of use of the establishment cause value "spare2" is not defined in the current version of 3GPP TS 25.331.

In the base station 3, the radio station 32 receives the rrcConnectionRequest signal as a cycle change request signal from the terminal 2 and, in response to the signal, the power-saving mode setting portion 31 switches the power-saving mode settings to "enabled". The power-saving mode setting portion 31 also changes in broadcast information the cycle of intermittent reception by the terminal to Tnew, which is N (N is a predetermined integer equal to or larger than 2) times the current cycle Tb. The power-saving mode setting portion 31. instructs the control portion 33 to perform intermittent transmission at the cycle Tnew as well. The power-saving mode setting portion 31 further transmits from the radio portion 32 a paging signal for notifying the change of the broadcast information to every terminal within the femtocell (Steps S706 and S803).

The terminal 2 receives the paging signal at the radio portion 25, obtains the broadcast information which includes the value of the changed intermittent reception cycle (Step S707), and starts intermittent reception at the changed cycle (Step S704).

In the case where Tnew is 2Tb, for example, the terminal 2, which has been receiving signals intermittently from a nearby base station at the cycle Tb immediately before entering the femtocell of the base station 3, receives signals intermittently from the base station 3 at the cycle 2Tb after entering the femtocell of the base station 3 and Steps S702, S705 to S707, and S704 described above are finished. This way, the frequency of intermittent reception drops by half and the power consumption of the terminal 2 is reduced that much.

The changed intermittent reception cycle is applied uniformly to every terminal present in the femtocell of the base station 3, which means that the other terminals present in the femtocell, too, benefit from the power consumption reducing effect accompanying the cycle change.

In the operation (2), the same effects as in the operation (1) are thus obtained, which include a reduction in the power consumption of a terminal that is present in the femtocell, only requiring the user to perform an operation of setting the power-saving mode to the terminal in order to achieve the reduction, and not needing input means for changing the operating mode of the base station.

### (3) Changing the Cycle to Depending on the Time Slot

In both of the above-mentioned two operations (1) and (2), the cycle of the cyclic operation is changed with a combination of two conditions, specifically, that the power-saving mode is enabled in the terminal 2 and that the terminal 2 is present in the femtocell of the base station 3, as a trigger. In contrast, an operation (3) described next adds to the trigger a condition that the current time must fall within a predetermined time slot. The premise of this operation is that the micro base station that forms a femtocell is set up in the user's home.

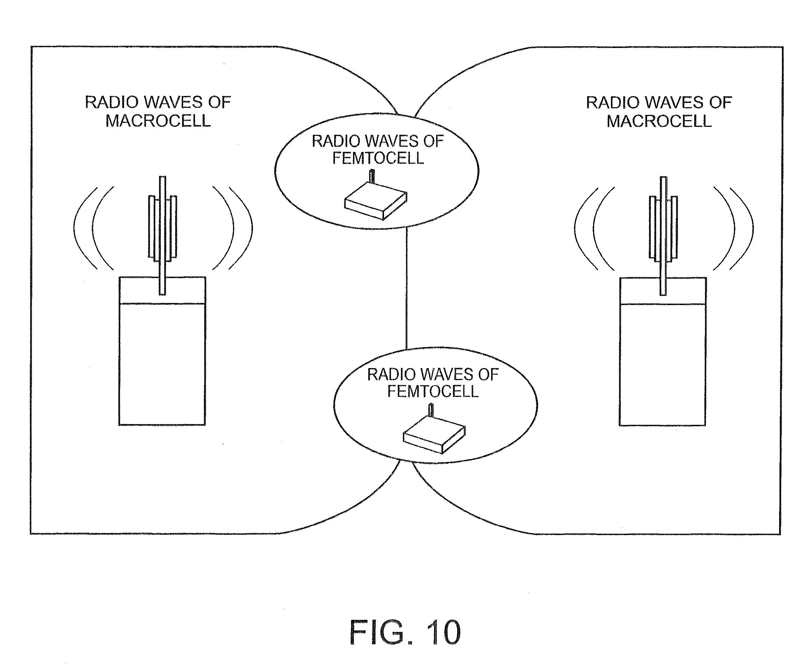

The description now is given with reference to Fig. 10. At the moment, no terminals are present in the femtocell of the base station 3 and "disabled" is set as the power-saving mode settings in the power-saving mode setting portion 31 of the base station 3. Immediately before entering the femtocell of the base station 3, the terminal 2 receives signals intermittently from a nearby base station at the cycle Tb (Step S901). In this situation, the terminal 2 subsequently travels into the area of the femtocell formed by the base station 3.

The user of the terminal 2 has set a time slot in which the terminal 2 is to shift to the power-saving mode in the time determining portion 27 via the input portion 21. Here, a late-night time slot, specifically, a time slot from 0:00 a.m. to 4:00 a.m., is set in the time determining portion 27.

In the case where power-saving mode settings which are set in the power-saving mode setting portion 23 of the terminal 2 at this point are "disabled", the terminal 2 continues intermittent reception at the cycle Tb after entering the femtocell of the base station 3 (Steps S902 to S904).

In the case where power-saving mode settings which are set in the power-saving mode setting portion 23 are "enabled", on the other hand, when the femtocell determining portion 26 determines that the terminal 2 is present in the femtocell, the power-saving mode setting portion 23 uses the time determining portion 27 to determine whether or not the current time falls within the preset time slot (Step S905). In the case where the current time is outside the late-night time slot in this example, the terminal 2 continues intermittent reception at the cycle Tb after entering the femtocell of the base station 3.

In the case where the power-saving mode settings are "enabled" and the current time is late at night, the power-saving mode setting portion 23 transmits a cycle change request signal via the radio portion 25 to the base station 3. In the base station 3, the power-saving mode setting portion 31 switches the power-saving mode settings to "enabled". The power-saving mode setting portion 31 also changes in broadcast information the cycle of intermittent reception by the terminal to Tnew, which is N (N is a predetermined integer equal to or larger than 2) times the current cycle Tb. The power-saving mode setting portion 31 instructs the control portion 33 to perform intermittent transmission at the cycle Tnew as well. The power-saving mode setting portion 31 further transmits from the radio portion 32 a paging signal for notifying the change of the broadcast information to every terminal within the femtocell. The terminal 2 receives the paging signal at the radio portion 25, obtains the broadcast information which includes the value of the changed intermittent reception cycle (Step S906), and starts intermittent reception at the changed cycle (Step S904). Step S906 corresponds to Steps S705 to S707 of the operation (2) described above, and Step S904 corresponds to Step 704 thereof. The cycle change request signal used here is, as in the operation (2), an RRC connection request signal (rrcConnectionRequest) set down in 3GPPTS 25.331 that has "spare2" as the value of the establishment cause information.

In the operation (3), the same effects as in the operation (1) and the operation (2) are obtained, which include a reduction in the power consumption of a terminal that is present in the femtocell, only requiring the user to perform an operation of setting the power-saving mode to the terminal in order to achieve the reduction, and not needing input means for changing the operating mode of the base station.

This invention has been described through the embodiment and example. However, this invention is not limited thereto and it goes without saying that the embodiment and example can be modified.

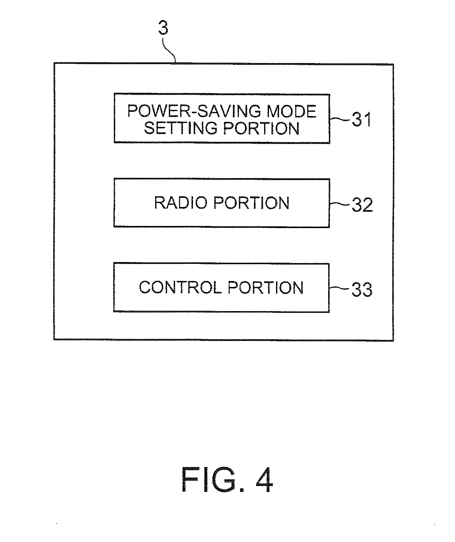

In the operations (1) to (3) described above, the length of the changed operation cycle is specified by the base station 3. This invention, however, is not limited thereto and the cycle length may be specified by the terminal. A possible mode of carrying this out is adding a relevant field to the screen of Fig. 4, or displaying, after the user performs an operation of selecting the power-saving mode on this screen, an operation cycle that is notified by the current broadcast information on another screen or the like to let the user of the terminal 2 input or select via the input portion 21 a new operation cycle to be set by the change. The terminal 2 may allocate the changed cycle to the establishment cause value of the rrcConnectionRequest signal described above, and use the signal to notify the length of the changed operation cycle to the base station 3. Using a protocol that is standardized by 3GPP thus eliminates the need to add input means for specifying the length of the changed operation cycle to the base station.

In the embodiment described above, a combination of a determination made by the power-saving mode setting portion 23 about whether power-saving settings are enabled or disabled and a determination made by the femtocell determining portion 26 about whether or not the terminal 2 is present in the femtocell is used as a trigger for changing the cycle of a cyclic operation. A condition that the terminal 2 must be connected to a battery charger may be used in addition to those determinations as part of the trigger. A battery charger for the terminal 2 is added to the mobile communication system 1, and the terminal 2 is provided with means for detecting connection to the battery charger. The terminal 2 transmits a cycle change request signal to the base station 3 when the power-saving settings are enabled, the terminal 2 is present in the femtocell, and the terminal 2 is connected to the battery charger. The system with the added battery charger can expect an additional effect in that the battery charging time is reduced by keeping the power consumption of the terminal being charged small.

In addition to the determination about whether power-saving settings are enabled or disabled and the determination about whether or not the terminal 2 is present in the femtocell, the result of a comparison between the signal strength of the femtocell that is measured by the radio portion 25 and a predetermined threshold for signal strength may further be used as part of the trigger. This way, effects provided by a cyclic operation are secured by keeping the operation cycle unchanged when the signal strength is low in the femtocell, and the power consumption of the terminal is reduced by extending the operation cycle when the signal strength is high.

In the embodiment described above, when even one of terminals present in a femtocell is set to a power-saving mode, the base station of the femtocell changes the cycle of a cyclic operation which is performed by the base station and a terminal in synchronization with each other for every terminal present in the femtocell. This operation derives from taking into consideration a femtocell which deals with a small number of specific terminals in many cases. However, non-specific terminals use a femtocell in some cases, and changing the operation cycle uniformly for all the terminals present in the femtocell may be inconvenient in such cases. In view of this, the base station may not change the operation cycle when a plurality of terminals are present in the femtocell even though a power-saving mode is enabled in one of the terminals. When receiving a cycle change request signal from the terminal 2, the base station 3 counts via the radio portion 32 the number of terminals that are present in the femtocell and, when there are two or more terminals present in the femtocell, the control portion 33 may ignore the cycle change request signal. Alternatively, when a terminal with the power-saving mode enabled is already present in the femtocell and another terminal newly enters the femtocell, the control portion 33 may change the operation cycle in broadcast information back to the pre-change value, or may change the cycle to a different length and notify the change to each terminal present in the femtocell with the use of a paging signal or the like.

In the embodiment described above, the power-saving mode setting portion 31 is provided in the base station which forms a femtocell. Instead, the power-saving mode setting portion 31 may be provided as another device that includes a communication interface for communicating to/from the terminal 2 via the base station 3, which forms a femtocell, and a control device for controlling a cyclic operation performed in cooperation with the terminal 2. Specifically, the alternative device may be a radio network controller (RNC) or a network device of the core network. Herein, base stations, RNCs, network devices of the core network, and other network devices are collectively referred to as network-side devices.

The embodiment described above gives updating location registration information and intermittent reception as examples of cyclic operations performed by the base station and a terminal, but this invention is not limited thereto. For example, the terminal may include a global positioning system (GPS) signal receiver and cyclic operations whose cycles are to be changed may be the GPS signal receiver's positioning processing and processing of notifying the positioning result to a given server on a network.

A part of or the entirety of the embodiment described above can also be described as in the following supplementary notes but are not limited thereto.

### (Supplementary note 1)

A mobile communication terminal, including:
means for determining whether the mobile communication terminal is present in a femtocell;
transmission means for transmitting, with the determination as a trigger, to a network-side device which performs a cyclic operation in cooperation with the mobile communication terminal, a first signal for requesting the network-side device to change the cycle, via a communication path that includes at least the femtocell;
reception means for receiving, via the communication path, a second signal, which is transmitted by the network-side device in response to the first signal and which notifies of a change to the cycle; and
control means for changing, in response to the reception of the second signal, the cycle of the cyclic operation performed by the mobile communication terminal.

### (Supplementary note 2)

A mobile communication terminal as described in Supplementary note 1, in which the cyclic operation is an operation relevant to updating location registration information of the mobile communication terminal.

### (Supplementary note 3)

A mobile communication terminal as described in Supplementary note 1, in which the cyclic operation is an operation relevant to intermittent reception.

### (Supplementary note 4)

A mobile communication terminal as described in any one of Supplementary notes 1 to 3, in which, in combination with the determination about whether the mobile communication terminal is present in the femtocell, at least one of the following conditions is used as the trigger:
that a predetermined operation mode is stored in a storage device for storing an operation mode that is set by a user via an input device of the mobile communication terminal;
that a predetermined time or a predetermined time slot is indicated by a clock of the mobile communication terminal;
that a connection of the mobile communication terminal to an external power source for battery charging is detected; and
that radio waves received by the mobile communication terminal from the base station have a predetermined signal strength.

### (Supplementary note 5)

A mobile communication terminal as described in any one of Supplementary notes 1 to 4, further including input means for allowing a user of the mobile communication terminal to specify a new cycle of the cyclic operation to be set by the change,
in which the transmission means transmits, along with the first signal, the new cycle specified via the input means to the network-side device.

### (Supplementary note 6)

A network-side device for performing a cyclic operation in cooperation with a mobile communication terminal which is present in a femtocell, the network-side device including:
reception means for receiving, via a communication path that includes at least the femtocell, a first signal which is transmitted by the mobile communication terminal with a determination that the mobile communication terminal is present in the femtocell as a trigger, and which is a request to change a cycle of the cyclic operation;
control means for changing, in response to the reception of the first signal, the cycle of the cyclic operation performed by the network-side device; and
transmission means for transmitting a second signal, which notifies of the change to the cycle, to the mobile communication terminal via the communication path.

### (Supplementary note 7)

A network-side device as described in Supplementary note 6, in which the cyclic operation is an operation relevant to updating location registration information of the mobile communication terminal.

### (Supplementary note 8)

A network-side device as described in Supplementary note 6, in which the cyclic operation is an operation relevant to intermittent reception.

### (Supplementary note 9)

A network-side device as described in any one of Supplementary notes 6 to 8,
in which the reception means receives, from the mobile communication terminal, along with the first signal, a new cycle of the cyclic operation to be set by the change which is specified by a user of the mobile communication terminal via input means of the mobile communication terminal, and
in which the control means changes the cycle to the new cycle.

### (Supplementary note 10)

A network-side device as described in any one of Supplementary notes 6 to 9, in which the network-side device is any one of a base station, a radio network controller (RNC) and a device on a core network.

### (Supplementary note 11)

A network-side device as described in any one of Supplementary notes 6 to 10, in which the new cycle to be set by the change varies depending on whether there is a single mobile communication terminal or a plurality of mobile communication terminals present in a femtocell of the network-side device, or in a femtocell of one of base stations that are under control of the network-side device.

### (Supplementary note 12)

A mobile communication system, including:
a mobile communication terminal; and
a network-side device for performing a cyclic operation in cooperation with the mobile communication terminal which is present in a femtocell,
in which the mobile communication terminal includes:
   means for determining whether the mobile communication terminal is present in the femtocell;
   means for transmitting, with the determination as a trigger, to the network-side device, a first signal for requesting the network-side device to change a cycle of the cyclic operation, via a communication path that includes at least the femtocell;
   means for receiving, via the communication path, a second signal, which is transmitted by the network-side device in response to the first signal and which notifies of a change to the cycle; and
   means for changing, in response to the reception of the second signal, the cycle of the cyclic operation performed by the mobile communication terminal, and
in which the network-side device includes:
   means for receiving the first signal via the communication path that includes at least the femtocell;
   means for changing, in response to the reception of the first signal, the cycle of the cyclic operation performed by the network-side device; and
   means for transmitting the second signal, which notifies of the change to the cycle, to the mobile communication terminal via the communication path.

### (Supplementary note 13)

A mobile communication system as described in Supplementary note 12, in which the cyclic operation is an operation relevant to updating location registration information of the mobile communication terminal.

### (Supplementary note 14)

A mobile communication system as described in Supplementary note 12, in which the cyclic operation is an operation relevant to intermittent reception.

### (Supplementary note 15)

A mobile communication system as described in any one of Supplementary notes 12 to 14, in which, in combination with the determination about whether the mobile communication terminal is present in the femtocell, at least one of the following conditions is used as the trigger:
that a predetermined operation mode is stored in a storage device for storing an operation mode that is set by a user of the mobile communication terminal;
that a predetermined time or a predetermined time slot is indicated by a clock of the mobile communication terminal;
that a connection of the mobile communication terminal to an external power source for battery charging is detected; and
that radio waves received by the mobile communication terminal from the base station have a predetermined signal strength.

### (Supplementary note 16)

A mobile communication system as described in any one of Supplementary notes 12 to 15, further including input means for allowing a user of the mobile communication terminal to specify a new cycle of the cyclic operation to be set by the change,
in which the means for transmitting the first signal transmits, along with the first signal, the new cycle specified via the input means to the network-side device.

### (Supplementary note 17)

A mobile communication system as described in any one of Supplementary notes 12 to 16, in which the network-side device is one of a base station that forms a femtocell, a radio network controller (RNC) that controls the base station, and a device on a core network to which the RNC is connected.

### (Supplementary note 18)

A mobile communication system as described in any one of Supplementary notes 12 to 17, in which the new cycle to be set by the change varies depending on whether there is a single mobile communication terminal or a plurality of mobile communication terminals present in a femtocell formed by the base station which functions as the network-side device, or in a femtocell formed by one of base stations that are under control of the network-side device.

### (Supplementary note 19)

A program for controlling a computer that is mounted to a mobile communication terminal to function as:
means for determining whether the mobile communication terminal is present in a femtocell;
transmission means for transmitting, with the determination as a trigger, a first signal for requesting to change a cycle of a cyclic operation which is performed by a device on a mobile communication network side and the mobile communication terminal in cooperation with each other, to a network-side device which controls the cyclic operation performed on the mobile communication network side, through wireless communication to/from a base station which forms the femtocell;
reception means for receiving, through the wireless communication to/from the base station, a second signal, which is transmitted by the network-side device in response to the first signal and which notifies of a change to the cycle; and
control means for changing, in response to the reception of the second signal, the cycle of the cyclic operation performed by the mobile communication terminal.

### (Supplementary note 20)

A program as described in Supplementary note 19, in which the cyclic operation is an operation relevant to updating location registration information of the mobile communication terminal.

### (Supplementary note 21)

A program as described in Supplementary note 19, in which the cyclic operation is an operation relevant to intermittent reception.

### (Supplementary note 22)

A program as described in any one of Supplementary notes 19 to 21, in which, in combination with the determination about whether the mobile communication terminal is present in the femtocell, at least one of the following conditions is used as the trigger:
that a predetermined operation mode is stored in a storage device for storing an operation mode that is set by a user via an input device of the mobile communication terminal;
that a predetermined time or a predetermined time slot is indicated by a clock of the mobile communication terminal;
that a connection of the mobile communication terminal to an external power source for battery charging is detected; and
that radio waves received by the mobile communication terminal from the base station have a predetermined signal strength.

### (Supplementary note 23)

A program as described in any one of Supplementary notes 19 to 22, further controlling the computer to function as input means for allowing a user of the mobile communication terminal to specify a new cycle of the cyclic operation to be set by the change,
in which the transmission means transmits, along with the first signal, the new cycle specified via the input means to the network-side device.

### (Supplementary note 24)

A program for controlling a computer that is mounted to a network-side device, the network-side device performing a cyclic operation in cooperation with a mobile communication terminal which is present in a femtocell, to function as:
reception means for receiving a first signal which is transmitted by the mobile communication terminal with a determination that the mobile communication terminal is present in the femtocell as a trigger, and which is a request to change a cycle of the cyclic operation;
control means for changing, in response to the reception of the first signal, the cycle of the cyclic operation performed by the network-side device; and
transmission means for transmitting a second signal, which notifies of the change to the cycle, to the mobile communication terminal.

### (Supplementary note 25)

A program as described in Supplementary note 24, in which the cyclic operation is an operation relevant to updating location registration information of the mobile communication terminal.

### (Supplementary note 26)

A program as described in Supplementary note 24, in which the cyclic operation is an operation relevant to intermittent reception.

### (Supplementary note 27)

A program as described in any one of Supplementary notes 24 to 26,
in which the reception means receives, from the mobile communication terminal, along with the first signal, a new cycle of the cyclic operation to be set by the change which is specified by a user of the mobile communication terminal via input means of the mobile communication terminal, and
in which the control means changes the cycle to the new cycle.

### (Supplementary note 28)

A program as described in any one of Supplementary notes 24 to 27, in which the network-side device is one of a base station, a radio network controller (RNC) and a device on a core network.

### (Supplementary note 29)

A program as described in any one of Supplementary notes 24 to 28, in which the new cycle to be set by the change varies depending on whether there is a single mobile communication terminal or a plurality of mobile communication terminals present in a femtocell of the network-side device, or in a femtocell of one of base stations that are under control of the network-side device.

### (Supplementary note 30)

A method of changing a cycle of a cyclic operation of a mobile communication system, including the steps of:
determining, by the mobile communication terminal, whether the mobile communication terminal is present in a femtocell;
with the determination as a trigger, transmitting from the mobile communication terminal, to a network-side device which performs the cyclic operation in cooperation with the mobile communication terminal, a first signal for requesting the network-side device to change the cycle of the cyclic operation, via a communication path that includes at least the femtocell;
changing, by the network-side device, the cycle of the cyclic operation performed in the network-side device in response to the reception of the first signal, and transmitting a second signal which notifies of the change, from the network-side device to the mobile communication terminal via the communication path; and
changing, by the mobile communication terminal, the cycle of the cyclic operation performed in the mobile communication terminal in response to the reception of the second signal.

### (Supplementary note 31)

A method as described in Supplementary note 30, in which the cyclic operation is an operation relevant to updating location registration information of the mobile communication terminal.

### (Supplementary note 32)

A method as described in Supplementary note 30, in which the cyclic operation is an operation relevant to intermittent reception.

### (Supplementary note 33)

A method as described in any one of Supplementary notes 30 to 32, in which, in combination with the determination about whether the mobile communication terminal is present in the femtocell, at least one of the following conditions is used as the trigger:
that a predetermined operation mode is stored in a storage device for storing an operation mode that is set by a user via an input device of the mobile communication terminal;
that a predetermined time or a predetermined time slot is indicated by a clock of the mobile communication terminal;
that a connection of the mobile communication terminal to an external power source for battery charging is detected; and
that radio waves received by the mobile communication terminal from the base station have a predetermined signal strength.

### (Supplementary note 34)

A method as described in any one of Supplementary notes 30 to 33, further including a step of allowing a user of the mobile communication terminal to specify a new cycle of the cyclic operation to be set by the change,
in which the step of transmitting of the first signal includes transmitting, along with the first signal, the specified new cycle to the network-side device.

This application claims priority from Japanese Patent Application No. 2010-36367, filed on February 22, 2010, the entire disclosure of which is incorporated herein by reference.

## Claims

1. A mobile communication terminal, comprising:
means for determining whether the mobile communication terminal is present in a femtocell;
transmission means for transmitting, with the determination as a trigger, to a network-side device which performs a cyclic operation in cooperation with the mobile communication terminal, a first signal for requesting the network-side device to change the cycle, via a communication path that comprises at least the femtocell;
reception means for receiving, via the communication path, a second signal, which is transmitted by the network-side device in response to the first signal and which notifies of a change to the cycle; and
control means for changing, in response to the reception of the second signal, the cycle of the cyclic operation performed by the mobile communication terminal.

2. A mobile communication terminal according to claim 1, wherein the cyclic operation comprises an operation relevant to updating location registration information of the mobile communication terminal.

3. A mobile communication terminal according to claim 1, wherein the cyclic operation comprises an operation relevant to intermittent reception.

4. A mobile communication terminal according to any one of claims 1 to 3, wherein, in combination with the determination about whether the mobile communication terminal is present in the femtocell, at least one of the following conditions is used as the trigger:
that a predetermined operation mode is stored in a storage device for storing an operation mode that is set by a user via an input device of the mobile communication terminal;
that a predetermined time or a predetermined time slot is indicated by a clock of the mobile communication terminal;
that a connection of the mobile communication terminal to an external power source for battery charging is detected; and
that radio waves received by the mobile communication terminal from the base station have a predetermined signal strength.

5. A mobile communication terminal according to any one of claims 1 to 4, further comprising input means for allowing a user of the mobile communication terminal to specify a new cycle of the cyclic operation to be set by the change,
wherein the transmission means transmits, along with the first signal, the new cycle specified via the input means to the network-side device.

6. A network-side device for performing a cyclic operation in cooperation with a mobile communication terminal which is present in a femtocell, the network-side device comprising:
reception means for receiving, via a communication path that comprises at least the femtocell, a first signal which is transmitted by the mobile communication terminal with a determination that the mobile communication terminal is present in the femtocell as a trigger, and which is a request to change a cycle of the cyclic operation;
control means for changing, in response to the reception of the first signal, the cycle of the cyclic operation performed by the network-side device; and
transmission means for transmitting a second signal, which notifies of the change to the cycle, to the mobile communication terminal via the communication path.

7. A mobile communication system, comprising:
a mobile communication terminal; and
a network-side device for performing a cyclic operation in cooperation with the mobile communication terminal which is present in a femtocell,
wherein the mobile communication terminal comprises:
means for determining whether the mobile communication terminal is present in the femtocell;
means for transmitting, with the determination as a trigger, to the network-side device, a first signal for requesting the network-side device to change a cycle of the cyclic operation, via a communication path that comprises at least the femtocell;
means for receiving, via the communication path, a second signal, which is transmitted by the network-side device in response to the first signal and which notifies of a change to the cycle; and
means for changing, in response to the reception of the second signal, the cycle of the cyclic operation performed by the mobile communication terminal, and
wherein the network-side device comprises:
means for receiving the first signal via the communication path that comprises at least the femtocell;
means for changing, in response to the reception of the first signal, the cycle of the cyclic operation performed by the network-side device; and
means for transmitting the second signal, which notifies of the change to the cycle, to the mobile communication terminal via the communication path.

8. A program for controlling a computer that is mounted to a mobile communication terminal to function as:
means for determining whether the mobile communication terminal is present in a femtocell;
transmission means for transmitting, with the determination as a trigger, a first signal for requesting to change a cycle of a cyclic operation which is performed by a device on a mobile communication network side and the mobile communication terminal in cooperation with each other, to a network-side device which controls the cyclic operation performed on the mobile communication network side, through wireless communication to/from a base station which forms the femtocell;
reception means for receiving, through the wireless communication to/from the base station, a second signal, which is transmitted by the network-side device in response to the first signal and which notifies of a change to the cycle; and
control means for changing, in response to the reception of the second signal, the cycle of the cyclic operation performed by the mobile communication terminal.

9. A program for controlling a computer that is mounted to a network-side device, the network-side device performing a cyclic operation in cooperation with a mobile communication terminal which is present in a femtocell, to function as:
reception means for receiving a first signal which is transmitted by the mobile communication terminal with a determination that the mobile communication terminal is present in the femtocell as a trigger, and which is a request to change a cycle of the cyclic operation;
control means for changing, in response to the reception of the first signal, the cycle of the cyclic operation performed by the network-side device; and
transmission means for transmitting a second signal, which notifies of the change to the cycle, to the mobile communication terminal.

10. A method of changing a cycle of a cyclic operation of a mobile communication system, comprising the steps of:
determining, by the mobile communication terminal, whether the mobile communication terminal is present in a femtocell;
with the determination as a trigger, transmitting from the mobile communication terminal, to a network-side device which performs the cyclic operation in cooperation with the mobile communication terminal, a first signal for requesting the network-side device to change the cycle of the cyclic operation, via a communication path that comprises at least the femtocell;
changing, by the network-side device, the cycle of the cyclic operation performed in the network-side device in response to the reception of the first signal, and transmitting a second signal which notifies of the change, from the network-side device to the mobile communication terminal via the communication path; and
changing, by the mobile communication terminal, the cycle of the cyclic operation performed in the mobile communication terminal in response to the reception of the second signal.
